# EUROPEAN PATENT SPECIFICATION

(11) **EP 4 023 473 B1**
(45) Date of publication and mention of the grant of the patent: **03.04.2024**
(21) Application number: 21217926.1
(22) Date of filing: 28.12.2021
(51) Int. Cl.: B60K 1/04, B60K 15/03, B62K 11/00

(54) **TWO-WHEELED FUEL CELL VEHICLE**
ZWEIRÄDRIGES BRENNSTOFFZELLENFAHRZEUG
VÉHICULE DE PILE À COMBUSTIBLE À DEUX ROUES

(30) Priority: 29.12.2020 IN 202041056929
(43) Date of publication of application: 06.07.2022
(73) Proprietor: TVS Motor Company Limited, 600006 Chennai (IN)
(72) Inventor: Krishnan, Devaki, 600 006 Chennai (IN); Rao Nileshwar, Pramila, 600 006 Chennai (IN); Murugan, Vinoth, 600 006 Chennai (IN); Kuppusamy, Ramakrishnan, 600 006 Chennai (IN); Palanisamy, Venkatesan, 600 006 Chennai (IN); Gangaiah, Chethan, 600 006 Chennai (IN); Subramanian, Ezhilarasan, 600 006 Chennai (IN); Jabez Dhinagar, Samraj, 600 006 Chennai (IN)
(74) Representative: Patentanwaltskanzlei Matschnig & Forsthuber OG

(56) References cited:
- EP-A1- 1 215 111
- CN-C- 100 355 600
- CN-Y- 2 440 694
- JP-A- 2005 112 095
- JP-A- 2006 058 184
- JP-A- 2007 112 406
- JP-A- 2009 035 044
- JP-A- 2009 078 624

## Description

### TECHNICAL FIELD

The present subject matter relates generally to a vehicle. More particularly but not exclusively the present subject matter relates to a fuel cell vehicle.

### BACKGROUND

Traditionally, a fuel cell powered vehicle is driven by electric energy drawn from a fuel cell. The fuel cell generates electric power by a chemical reaction between a fuel gas and an oxidant gas. A motor is adapted to be driven by the electric power from the fuel cell. The fuel gas is stored in onboard fuel tanks. The reaction between the fuel gas and the oxidant gas to generate electric power produces a by-product in the form of water and heat which is expelled through an exhaust pipe. The fuel cell together with the fuel gas storage canisters occupies a large space in the vehicle and contributed to a significant portion of the vehicle weight.
Document JP 2009-035044 A discloses a straddle type fuel cell vehicle, which is provided with a pair of right and left rear frames extended to a lower rear side by connecting one end to a head pipe and extended to an upper rear side at a vehicle body center, and a reserve tank arranged adjacently to a seat to be stored in widths of the pair of rear frames. In the reserve tank, a vehicle width direction dimension is made longer than a vehicle body longitudinal direction dimension. The fuel cell is provided on a lower side of the seat, and radiators are adjacently arranged on right and left sides of the vehicle width direction of the fuel cell.

### BRIEF DESCRIPTION OF THE DRAWINGS

The details are described with reference to an embodiment of a saddle type two wheeled vehicle along with the accompanying figures. The same numbers are used throughout the drawings to reference similar features and components.
Figure 1(a) exemplarily illustrates a side view of a two-wheeled vehicle.
Figure 1(b) exemplarily illustrates a side view with few exploded parts of the two-wheeled vehicle.
Figure 2 exemplarily illustrates a rear side perspective view of a saddle type two-wheeled vehicle with the at least one reactant canister mounted in the front portion.
Figure 3 exemplarily illustrates a rear perspective view of a frame structure of a saddle type two-wheeled vehicle with the mounting structure of the one or more reactant canisters.
Figure 4 exemplarily illustrates a front perspective view showing the plurality of balance of plant (BOP) component.
Figure 5 (a) exemplarily illustrates a top view of the vehicle having a latch assembly for the fuel cell stack.
Figure 5 (b) exemplarily illustrates a side view of the frame of the vehicle having a mounting structure and a latch assembly for the fuel cell stack.
Figure 5 (c) exemplarily illustrates a front perspective view of the frame of the vehicle having the mounting structure and the latch assembly for the fuel cell stack.
Figure 6 exemplarily illustrates a rear view of the fuel cell stack of the vehicle.

### DETAILED DESCRIPTION

Generally, the fuel cells are placed towards the center of the vehicle body considering weight balance of the vehicle. The fuel cells can also be placed at the lowest part of the vehicle body and in the center in the front-end direction of the vehicle body. Mainly, hydrogen at high pressure is used as fuel gas. A major obstacle to the development of hydrogen-powered fuel cell vehicles is the lack of safe, lightweight and energy efficient means of onboard hydrogen storage. So, a further hydrogen storage device is required to store the fuel for producing electric energy. Moreover, the fuel cell generates heat and thus cool water device is also required for maintaining a normal working temperature.

Furthermore, disposition of all the above-mentioned devices in a preferable way is very crucial so as to design a compact vehicle which is safe, stable and convenient for use. The layout of the vehicle needs to achieve good aesthetics as well as provide safety to the user. Besides requirement for the performance of the power source, the layout design of the fuel cell vehicle is crucial to utilize the space available within the layout. In the conventional designs of fuel cell vehicle, hydrogen storage canisters and/or other components are positioned below a footstep portion, which is not a suitable layout for weight balancing. As a consequence, the overall safety requirements are adversely affected due to the unbalanced Weight. Also, in many two-wheeled vehicles, the hydrogen storage vessel is placed below a seat and then a stack cell is placed in its upward vicinity. In such scenarios, accessing hydrogen cylinder vessel for refuelling and the stack cell for servicing becomes a difficult task. In order to access the cylinder vessel, one has to remove some parts like seat, utility box, and the like to reach the cylinder vessel and the fuel cell stack. While known arts have disclosed various layouts, these also suffer from a drawback of not being flexible and adaptable to suit requirements of different platform of products like a scooter type vehicle, a motorcycle type vehicle etc. thereby increasing the complexity for manufacturer to handle variety in production. Therefore, it is desired to have a more efficient layout configuration of the fuel cell and related components on a fuel cell vehicle for eliminating the aforementioned problems.

Therefore, there exists a need for designing an improved layout configuration of a compact saddle type vehicle to dispose the hydrogen storage, the fuel cell stack, and other related components in the two-wheeler space in an efficient and effective way, which helps in having a safe, is lightweight and energy efficient in terms of onboard hydrogen storage. The layout needs to enable configuring all other related components in the vehicle to cater to the various requirements of platform of product variants while overcoming all above problems as well as other problems of known art.

An objective of the present subject matter is to provide an improved vehicle layout design to configure compact mounting for a hydrogen storage and a fuel cell stack for a two-wheeler, which can provide a safe, lightweight and energy efficient means of onboard hydrogen storage and other related components in the vehicle, which in turn helps in ease of access, ease in refuelling, easy of assembly, serviceability and also lowers and balances the center of gravity. The present subject matter is described using an exemplary saddle type two-wheeled vehicle, whereas the claimed subject matter is applicable to any type of two-wheeled and three wheeled vehicles, with required changes and without deviating from the scope of invention.

As per an aspect of the present subject matter, a two-wheeled fuel cell vehicle as defined by the features of claim 1 is disclosed. At least one reactant canister is mounted to said front portion of the frame structure of the vehicle to store reactant, and at least one fuel cell stack is mounted in said rear portion of the frame structure of the vehicle.

As per an aspect of the present subject matter, the two-wheeled fuel cell vehicle is configured with a frame structure comprising a head pipe in the front portion of the vehicle; a front frame structure extending downward from said head pipe; a center frame structure extending rearward from a lower portion of said front frame structure; and a rear frame structure extending rearwards and obliquely upwards from the rear end of the center frame structure in the rear portion of the vehicle. One or more power source being configured to be supported by the centre frame structure of the vehicle. The at least one reactant canister being mounted to said centre frame structure and configured to be supported by said front frame structure. The at least one fuel cell stack being mounted to said rear frame structure.

As per an aspect of the present subject matter, the at least one reactant canister configured to be a low-pressure reactant canister.

As per an aspect of the present subject matter, the at least one reactant canister is mounted by means of a one or more C- profile holding brackets and a bottom stopper.

As per an aspect of the present subject matter, the at least one reactant canister is configured to have a sensor to detect a leak of the reactant and to warn a user of the vehicle.

As per an aspect of the present subject matter, the vehicle includes a plurality of balance of plant (BOP) components disposed in a lower section of the rear frame of the vehicle. The plurality of BOP components receives reactant from the at least one reactant canister through a reactant tubing.

As per another aspect of the present subject matter, the reactant tubing extends from the at least one reactant canister along one of the sides of a floor board.

As per another aspect of the present subject matter, the plurality of BOP components includes a pressure regulator, a mass flow meter, a solenoid valve, a blower, a heater, and a temperature sensor. The pressure regulator connected to the reactant tubing from the at least one reactant canisters to regulate the reactant flow to the at least one fuel cell stack. The mass flow meter connected to the pressure regulator measures the flow of the reactant to the at least one fuel cell stack. The solenoid valve is regulated by a fuel cell controller to supply reactant into the at least one fuel cell stack. The blower is used to blow air into the at least one fuel cell stack for the reaction to take place to generate current, water vapor, and exhaust. The heater is used to maintain temperature of the reactant and air for the reaction to take place. The temperature sensor is used to measure temperatures of the reactant and the air.

As per another aspect of the present subject matter, the at least one exhaust tubing exiting from the at least one fuel cell stack, said exhaust tubing is disposed in a rear section of the rear frame structure and configured to be disposed below a seat in a basket like structure.

As per another aspect of the present subject matter, the at least one fuel cell stack is secured with a latch assembly.

As per another aspect of the present subject matter, the at least one exhaust tubing includes a proportional valve in line, and an exhaust manifold exhausting water vapor as a by-product of the reaction.

As per another aspect of the present subject matter, an instrument cluster being configured to display the reading of the mass flow meter.

As per yet another aspect of the present subject matter, the at least one fuel cell stack, the at least one reactant canister, and at least one battery is symmetrically disposed along the longitudinal mid-plane of the vehicle.

As per yet another aspect of the present subject matter, all wiring harness is disposed at one of a left-hand side and a right-hand side of the vehicle and all other piping and the BOP being disposed on the lateral opposite side of the vehicle.

As per yet another aspect of the present subject matter, a two-wheeled fuel cell vehicle comprising a frame structure having a front portion and at least one reactant canister mounted to said front portion of the frame structure of said vehicle to store reactant.

As per yet another aspect of the present subject matter, said frame structure comprising a head pipe in the front portion of the vehicle; a front frame structure extending downward from said head pipe; a center frame structure extending rearward from a lower portion of said front frame structure; a rear frame structure extending rearwards and obliquely upwards from the rear end of the center frame structure in the rear portion of the vehicle. One or more power source being supported by the centre frame structure of the vehicle. The at least one reactant canister being mounted to said centre frame structure and configured to be supported by said front frame structure.

As per yet another aspect of the present subject matter, said at least one reactant canister configured to be a low-pressure reactant canister. The at least one reactant canister being mounted by means of a one or more C- profile holding brackets and a bottom stopper. The at least one reactant canister being configured to have a sensor to detect a leak of said reactant and to warn a user of the vehicle.

As per yet another aspect of the present subject matter, said vehicle includes a plurality of balance of plant (BOP) components positioned substantially in a lower section of said rear frame structure of the vehicle. The plurality of BOP components receives the reactant from said at least one reactant canister through a reactant tubing.

As per yet another aspect of the present subject matter, said reactant tubing extends from said at least one reactant canister along one of the sides of a floor board.

As per yet another aspect of the present subject matter, a two-wheeled fuel cell vehicle comprising a frame structure having a rear portion and at least one fuel cell stack mounted to said rear portion of the frame structure of said vehicle.

As per yet another aspect of the present subject matter, said frame structure comprising a head pipe in the front portion of the vehicle; a front frame structure extending downward from said head pipe; a center frame structure extending rearward from a lower portion of said front frame structure; and a rear frame structure extending rearwards and obliquely upwards from the rear end of the center frame structure in the rear portion of the vehicle. One or more power source being supported by the centre frame structure of the vehicle. The at least one fuel cell stack being mounted to said rear frame structure.

As per yet another aspect of the present subject matter, said at least one exhaust tubing exiting from the at least one fuel cell stack being disposed in a rear section of the rear frame structure and being configured to be disposed below a seat in a basket like structure.

As per yet another aspect of the present subject matter, said at least one fuel cell stack being secured with a latch assembly.

As per yet another aspect of the present subject matter, said at least one exhaust tubing includes a proportional valve in line and an exhaust manifold exhausting water vapor as a by-product of the reaction. The embodiments of the present invention will now be described in detail with reference to an embodiment in a saddle type two wheeled vehicle along with the accompanying drawings. However, the present invention is not limited to the present embodiments. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

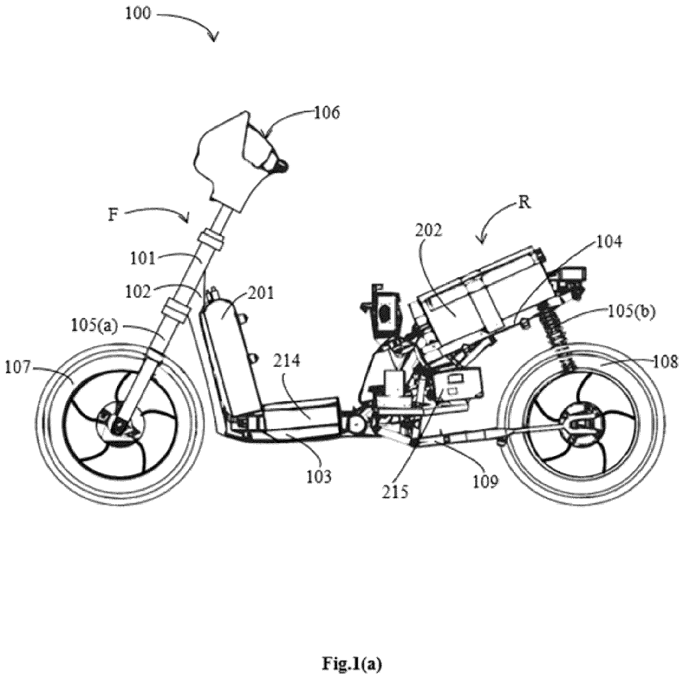

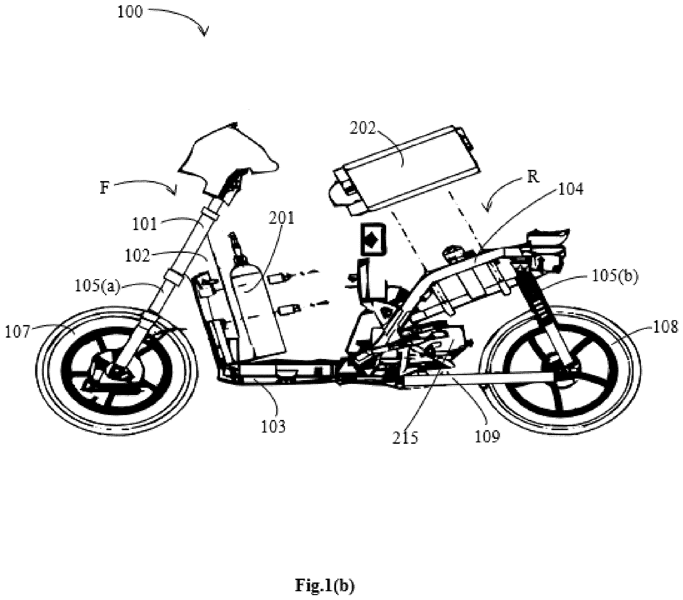

**Fig.1(a)** exemplarily illustrates a side view of a two-wheeled vehicle **100.** **Fig.1(b)** exemplarily illustrates a side view with few exploded parts of the two-wheeled vehicle **100.** The two-wheeled vehicle **100** has a front portion **F** and a rear portion **R.** The front portion **F** of the vehicle **100** includes a head pipe **101,** a front frame structure **102,** a center frame structure **103,** a front shock absorber **105(a),** a steering assembly **106,** and a front wheel **107.** The rear portion **R** of the vehicle **100** includes a rear frame structure **104,** a rear wheel **108,** a pair of rear shock absorbers (one shown) **105(b),** and a swingarm **109.** The front frame structure **102** of the vehicle **100** along with the front shock absorber **105(a)** is connected to the front wheel **107.** The front frame structure **102** extends downward from the head pipe **101** and the center frame structure **103** extends rearward from a lower portion of the front frame structure **102.** The rear portion **R** includes the pair of rear shock absorber **105(b)** connected to the rear frame structure **104** of the vehicle **100** at one end and the other end of the shock absorber **105(b)** is connected to an axle of the rear wheel **108.** The swingarm **109** is connected to the frame of the vehicle **100** at one end in longitudinal direction of the vehicle **100** and the other end is connected to the swing-arm 109 (not shown) in proximity of the axle of the rear wheel **108.** The fuel cell two-wheeled vehicle **100** includes an at least one fuel cell stack **202,** an at least one reactant canister **201,** a battery pack **214,** a fuel cell controller/ fuel cell converter **215.** The at least one reactant canister **201** is mounted to the centre frame structure **103** of the vehicle **100** to store the reactant and the at least one fuel cell stack **202** positioned in a top section of said rear frame structure **104** of the vehicle **100.**

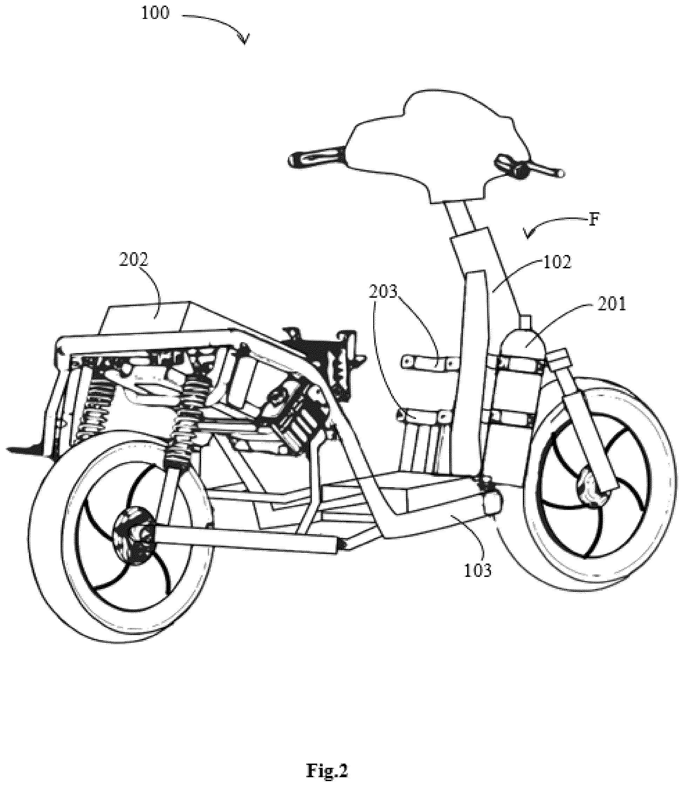

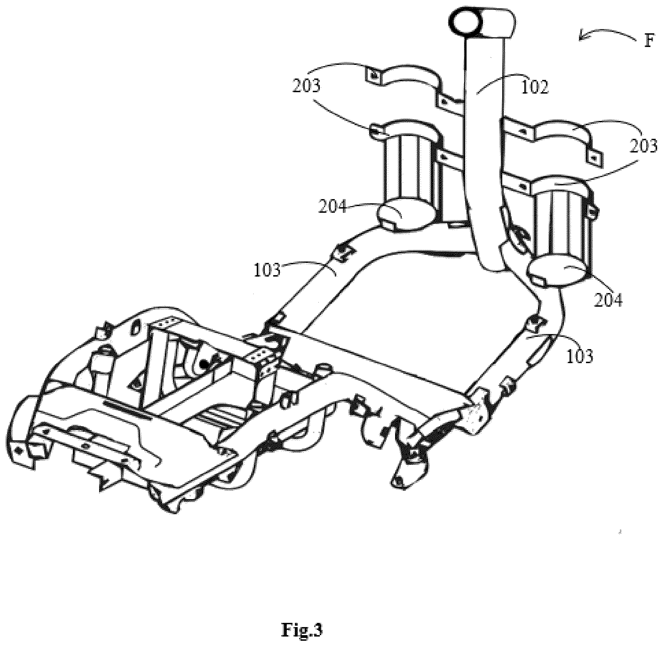

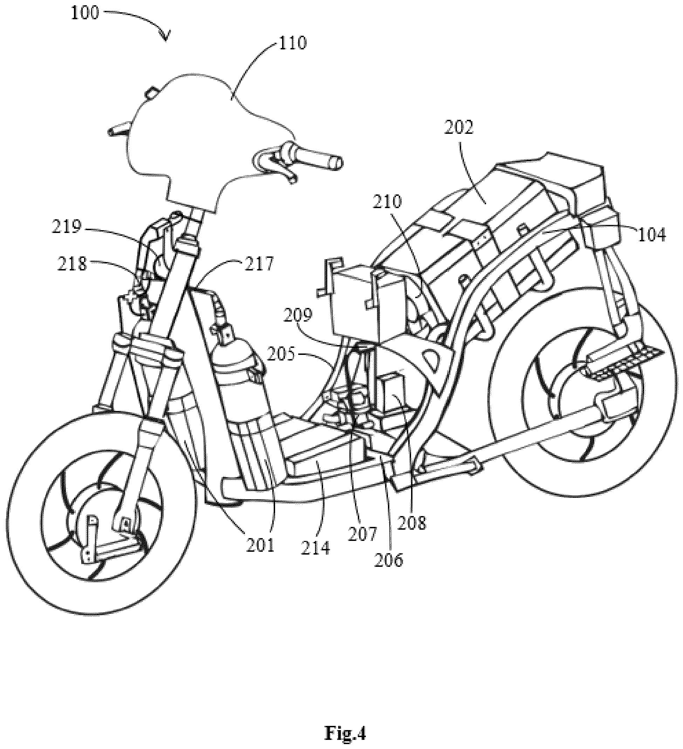

**Fig.2** exemplarily illustrates a rear side perspective view of a saddle type two-wheeled vehicle **100** with the at least one reactant canister **201** mounted in the front portion **F.** In the present embodiment, there are two reactant canisters (shown in figure 4) **201** mounted on the front frame structure **102** in the front portion **F** of the vehicle **100.** However, there can be one or more reactant canister **201** mounted on the vehicle based on the vehicle configuration. The two reactant canisters **201** are placed in the front portion **F** of the frame of the vehicle **100.** In the present embodiment the reactant canister **201** is a low-pressure reactant canister **201.** The reactant canisters **201** are supported by the front frame structure **102** from the sides and the bottom part is supported on the center frame structure **103** to support the canisters **201** from the bottom side. Each canister **201** is disposed in a space on both a left side and a right side of the front frame structure **102.** The canister **201** is mounted in the front portion **F** of the vehicle **100** to facilitate ease of access for refuelling, during serviceability and for ease of assembly. A refuelling port (not shown) opens in the front side of the vehicle makes it easily accessible to the user of the vehicle, while being seated. The canister **201** is mounted on the front frame structure **102** by means of a one or more C- profile holding bracket **203** and a bottom stopper **204** (shown in fig. 3) disposed on the center frame structure **103** on which the bottom of the canister **201** is supported. The two canisters **201** are connected together through a coupler **217** (shown in fig. 4) having a cross connector **218** (shown in fig. 4) with one or more outlets. A first outlet of the cross connector **218** (shown in fig. 4) is connected to a pressure gauge **219** (shown in fig. 4) for measuring the reactant canister **201** pressure and a second outlet of the cross connector **218** (shown in fig. 4) is used for reactant refuelling. Both the reactant canister **201** filling port (not shown) and the pressure gauge **219** (shown in fig. 4) are easily accessible to the user. A third outlet from said cross connector **218** is configured to be connected with a plurality of balance of plant (BOP) component **(207, 208, 209, 210)** (shown in figure 4) to facilitate the flow of reactants from said reactant canisters **201** to the fuel cell stack **202** of the vehicle **100.** A one or more sensors (not shown) are disposed on the reactant canisters **201** to detect the leak of the reactant from the reactant canisters **201** and to give warning to the user of the vehicle.

**Fig.3** exemplarily illustrates a rear perspective view of a frame structure of a saddle type two-wheeled vehicle **100** with the mounting structure of the one or more reactant canisters **201** (shown in fig. 2). In order to mount the reactant canister **201** (shown in fig. 2) in the front portion **F** of the frame, a one or more first set of a triple C profile holding bracket **203** connected together is disposed on the front frame structure **102.** The middle C profile of the holding bracket **203** is configured to be smaller as compared to the other two holding C profile brackets **203** and is mounted encircling the front frame structure **102.** At least one or more reactant canister **201** (shown in fig. 2) is mounted on the two left and right-side C profile holding brackets **203.** A one or more second set of the triple C profile holding bracket **203** is placed on the at least one reactant canister **201** (shown in fig. 2), encircling the canister from behind to form a circular shape. The one or more first set of the triple C profile holding bracket **203** is fixed by welding on the frame of the vehicle. The one or more second set of triple C profile holding rear brackets **203** are detachably attached with the one or more first triple C profile holding brackets **203** by fastening means (not shown). The at least one or more reactant canister **201** (shown in fig. 2) is mounted using the C-profile holding bracket **203** and the bottom stopper **204.** The canister **201** (shown in fig. 2) sits on the bottom stopper **204** supported by the center frame structure **103.**

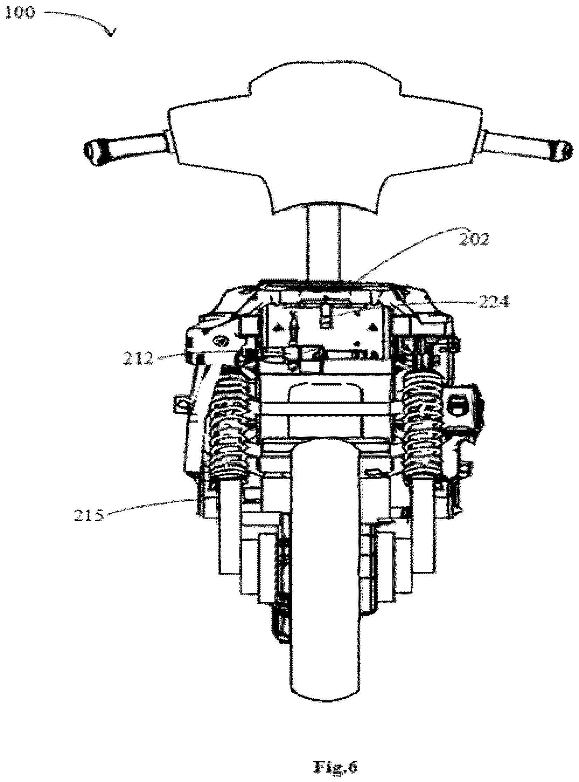

**Fig.4** exemplarily illustrates a front perspective view showing the plurality of balance of plant (BOP) component **(207, 208, 209, 210).** The fuel cell two-wheeled vehicle **100** includes the plurality of balance of plant (BOP) components **(207, 208, 209, 210)** disposed in a lower section of said rear frame structure **104** of the vehicle **100.** The plurality of BOP components includes a pressure regulator **207,** a reactant tubing **205,** a mass flow meter **208,** a solenoid valve **209,** a fuel cell controller/converter **215** (shown in fig.1(b)), a blower **210,** a heater (not shown), a temperature sensor (not shown), and a proportional valve **212** (shown in fig.6). The pressure regulator **207** is connected to the reactant tubing **205** coming from the at least one reactant canisters **201** to regulate the reactant flow to the at least one fuel cell stack **202.** The mass flow meter **208** is connected to an outlet of the pressure regulator **207** to measure the flow of the reactant to the at least one fuel cell stack **202.** The reading of the mass flow meter **208** is displayed on an instrument cluster **110** for the reference of the user of the vehicle **100.** The solenoid valve **209** is regulated by the fuel cell controller **215** (shown in fig. 1(b)) to inlet the reactant into the at least one fuel cell stack **202.** The solenoid valve **209** acts as a gate, allowing the fuel to flow to the fuel cell stack **202** for generating driving force for the motor (not shown), depending upon the opening and closing of said solenoid valve **209.** The blower **210** is used to blow air into said at least one fuel cell stack **202** for the reaction to take place to generate current, water vapor, and exhaust. The heater (not shown) is utilized to maintain temperature of the reactant and air for the reaction to take place, and the temperature sensor (not shown) is used to measure temperatures of the reactant and the air. The plurality of BOP components **(207, 208, 209, 210)** receives reactant from said at least one reactant canister **201** through the reactant tubing **205.** The reactant tubing **205** extends from said at least one reactant canister **201** along one of the sides of a floor board **206.** The fuel cell controller **215** (shown in fig.1(b)) regulates the actions of the BOP components **(207, 208, 209, 210)** so as to increase or decrease the fuel cell voltage to operate a motor (not shown) to drive the vehicle **100.** The fuel cell controller **215** (shown in fig.1(b)) also carries out the process of power sharing between the fuel cell stack **202** and the battery pack **214.** The output of the fuel cell controller **215** (shown in fig.1(b)) goes to the motor controller (not shown) and further it goes to the motor (not shown). All the wiring harness (not shown) is disposed at one of a left-hand side and a right-hand side of the vehicle and all other piping (not shown) for BOP **(207, 208, 209, 210)** and the BOP's are disposed on the lateral opposite side of the vehicle **100.**

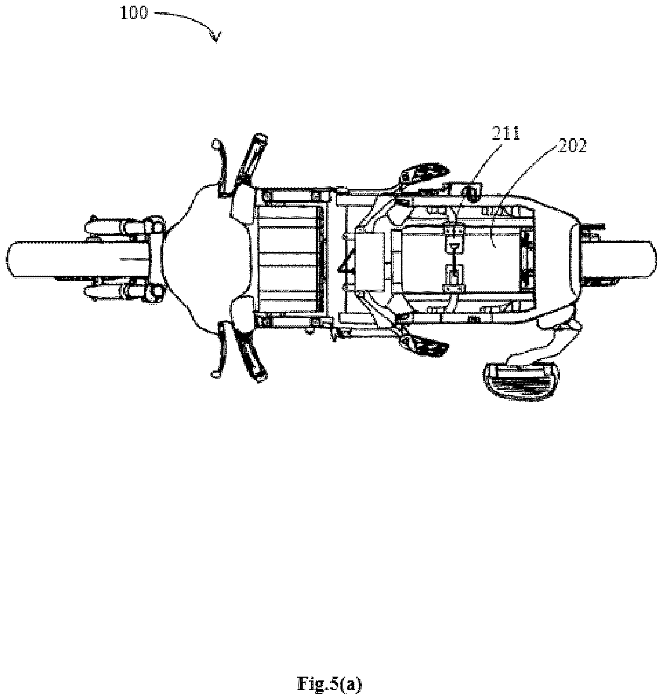

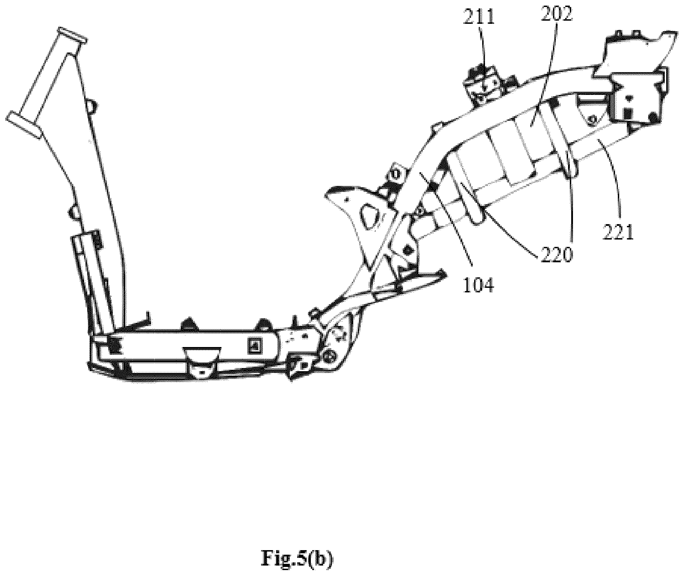

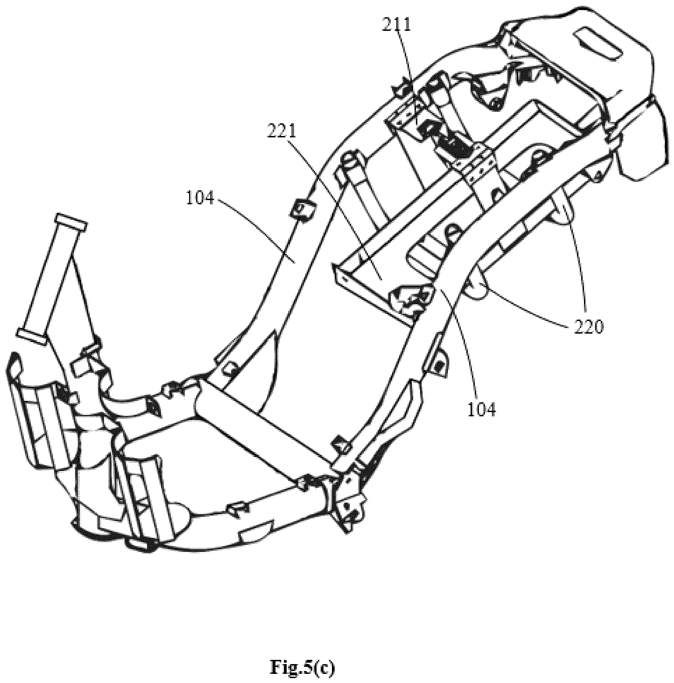

**Fig.5(a)** exemplarily illustrates a top view of the vehicle having a latch assembly **211** for the fuel cell stack **202.** **Fig.5(b)** exemplarily illustrates a side view of the frame of the vehicle **100** having a mounting structure and the latch assembly **211** for the fuel cell stack **202.** **Fig.5(c)** exemplarily illustrates a front perspective view of the frame of the vehicle **100** having the mounting structure and the latch assembly **211** for the fuel cell stack **202.** The fuel cell stack **202** is an assembly of a plurality of electrodes that utilizes the reactant and air (oxygen) to produce electricity for driving the vehicle. The fuel cell stack **202** is mounted in an inclined position to the rear frame structure **104** and below a seat (not shown) with the help of a plurality of substantially U-shaped tubes **220** and at least a latch assembly **211.** The plurality of substantially U-shaped tubes **220** is mounted on the rear frame structure **104** and extends in downward direction, forming a basket like structure to hold the fuel cell stack **202.** A base plate **221** is supported by the plurality of substantially U-shaped tubes **220,** to receive the fuel cell stack **202.** The at least one fuel cell stack **202** is secured with a latch assembly **211,** hugging the fuel cell stack **202.** Thus, the fuel cell stack **202** can be removed from the vehicle **100** by just opening the latch assembly **211** with ease. Also, it facilitates ease in serviceability, as it does not mandate to take out the fuel cell stack **202** for servicing and it can be done easily while being mounted on the rear frame structure **104.** The fuel cell stack **202** includes the solenoid valve **209** (shown in fig. 4) and the proportional valve **212** (shown in fig. 6) which are electronically controlled by the fuel cell controller **215** (shown in fig. 1(b)). The reactant from the reactant canister **201** travels through the tubing **205** to the BOP components where it goes to the pressure regulator **207** (shown in fig. 4) to measure the pressure and then passes to the mass flow meter **208** (shown in fig. 4) to calculate the amount of fuel to be passed. Further the fuel passes through the solenoid valve **209** (shown in fig. 4) to reach the fuel cell stack **202,** where the chemical reaction takes place for generating the driving force. This driving force is fed to the motor (not shown) to drive the vehicle **100.** At the last stage, the by-products and exhaust pass through the proportional valve **212** (shown in fig. 6) to exit in the atmosphere.

**Fig.6** exemplarily illustrates a rear view of the fuel cell stack **202** of the vehicle **100.** A rear end of the fuel cell stack **202** includes at least one exhaust tubing (not shown) having the proportional valve **212** in line. The proportional valve **212** is mounted by means of a plurality of adjustable flange (not shown) and with a plurality of screwing means (not shown). The proportional valve **212** is electronically controlled by the fuel cell controller **215.** The reactant exhaust is connected to the proportional valve **212.** Depending upon the voltage of the fuel cell (not shown), it opens automatically to remove the exhaust. Whenever the voltage comes down, it indicates the accumulation of exhaust, the controller **215** then instructs to open the proportional valve **212** for particular time and frequency. The time and frequency are pre-set in the controller **215.** An oxidant exhaust manifold **224** is disposed on the rear of the fuel cell stack **202** facing in downward direction. The oxidant exhaust manifold **224** emits water and heat formed as a by-product during chemical reaction of the reactant from the fuel cell stack **202.** The oxidant exhaust manifold **224** from the fuel cell stack **202** is controlled by the proportional valve **212** to avoid fuel starvation. The oxidant exhaust manifold **224** can be opened based on the exhaust air pressure. The at least one fuel cell stack **202,** said at least one reactant canister **201** (shown in fig.4), and said at least one battery **214** (shown in fig.4) is symmetrically disposed along the longitudinal mid-plane of the vehicle **100** to maintain desired centre of gravity of the vehicle. The mounting and positioning of at least one of the reactant canisters **201** (shown in fig.4) and at least one of the fuel cell stacks **202** ensures safety of the user of the vehicle **100.** The Many other improvements and modifications may be incorporated herein without deviating from the scope of the claims.

### List of Reference numerals

100: Two-wheeled fuel cell vehicle
F: Front portion of 100
R: Rear portion of 100
101: Head pipe of 100
102: Front frame structure of 100
103: Center frame structure of 100
104: Rear frame structure of 100
105(a): Front shock absorber of 102
105(b): Rear shock absorber of 104
106: Steering assembly of 100
107: Front wheel of 100
108: Rear wheel of 100
109: Swingarm of 100
110: Instrument cluster of 100
201: Reactant canister of 100
202: Fuel cell stack of 100
203: One or more C- profile bracket for 201
204: Bottom stopper for 201
205: Reactant tubing for 201,202
206: Floorboard of 100
207: Pressure regulator of 100
208: Mass flow meter of 100
209: Solenoid valve of 202
210: Blower of 202
211: Latch assembly of 202
212: Proportional valve of 202
213: Exhaust manifold of 202
214: Battery pack of 100
215: Fuel cell controller of 100
217: Coupler of 201
218: Cross connector of 201
219: Pressure gauge of 201
220: U-shaped tubes for 202
221: Base plate for 202
224: Exhaust manifold for 202

## Claims

1. A two-wheeled fuel cell vehicle (100) comprising:
a frame structure having a front portion (F) and a rear portion (R);
at least one reactant canister (201), said at least one reactant canister (201) being mounted to said front portion (F) of the frame structure of said vehicle (100) to store reactant; and
at least one fuel cell stack (202), said at least one fuel cell stack (202) being mounted to said rear portion (R) of the frame structure of said vehicle (100);
wherein said at least one reactant canister (201) is mounted to a centre frame structure (103) and configured to be supported by a front frame structure (102).

2. The two-wheeled fuel cell vehicle (100) as claimed in claim 1, wherein said frame structure comprises:
a head pipe (101), said head pipe (101) being disposed the front portion (F) of the vehicle;
said front frame structure (102) extending downward from said head pipe (101);
said centre frame structure (103) extending rearward from a lower portion of said front frame structure (102); and
a rear frame structure (104) extending rearwards and obliquely upwards from the rear end of the centre frame structure (103) in the rear portion (R) of the vehicle;
wherein
one or more power source (214) being configured to be supported by the centre frame structure (103) of the vehicle (100); and
said at least one fuel cell stack (202) being mounted to said rear frame structure (104).

3. The two-wheeled fuel cell vehicle (100) as claimed in claim 1, wherein said at least one reactant canister (201) being configured to be a low-pressure reactant canister (201).

4. The two-wheeled fuel cell vehicle (100) as claimed in claim 1, wherein said at least one reactant canister (201) being mounted by means of one or more C-profile holding brackets (203) and a bottom stopper (204).

5. The two-wheeled fuel cell vehicle (100) as claimed in claim 1, wherein said at least one reactant canister (201) being configured to have a sensor to detect a leak of said reactant and to warn a user of the vehicle (100).

6. The two-wheeled fuel cell vehicle (100) as claimed in claim 2, wherein said vehicle (100) includes a plurality of Balance Of Plant (BOP) components disposed in a lower section of said rear frame structure (104) of the vehicle (100), wherein said plurality of BOP components receives the reactant from said at least one reactant canister (201) through a reactant tubing (205).

7. The two-wheeled fuel cell vehicle (100) as claimed in claim 6, wherein said reactant tubing (205) extends from said at least one reactant canister (201) along a side of a floor board (206).

8. The two-wheeled fuel cell vehicle (100) as claimed in claim 6, wherein said plurality of BOP components includes:
a pressure regulator (207) connected to said reactant tubing (205) from said at least one reactant canisters (201) to regulate reactant flow to said at least one fuel cell stack (202);
a mass flow meter (208) connected to said pressure regulator (207) to measure flow of the reactant to the at least one fuel cell stack (202);
a solenoid valve (209) regulated by a fuel cell controller (215) to supply reactant into said at least one fuel cell stack (202);
a blower (210) to blow air into said at least one fuel cell stack (202) for a reaction to take place to generate current, water vapor, and exhaust;
a heater to maintain temperature of the reactant and air for said reaction to take place; and
a temperature sensor to measure temperatures of the reactant and the air.

9. The two-wheeled fuel cell vehicle (100) as claimed in claim 2, configured with at least one exhaust tubing exiting from the at least one fuel cell stack (202), said exhaust tubing being disposed in a rear section of the rear frame structure (104) and being configured to be disposed below a seat in a basket like structure.

10. The two-wheeled fuel cell vehicle (100) as claimed in claim 1, wherein said at least one fuel cell stack (202) being secured with a latch assembly (211).

11. The two-wheeled fuel cell vehicle (100) as claimed in claim 9, wherein said at least one exhaust tubing includes:
a proportional valve (212) in line with said at least one exhaust tubing; and
an exhaust manifold (224) exhausting water vapor as a by-product of said reaction.

12. The two-wheeled fuel cell vehicle (100) as claimed in claim 8, wherein an instrument cluster (110) being configured to display said reading of the mass flow meter (208).

13. The two-wheeled fuel cell vehicle (100) as claimed in claim 1 or 2, wherein said at least one fuel cell stack (202), said at least one reactant canister (201), and at least one battery pack (214) being disposed along a longitudinal mid plane of the vehicle (100).

14. The two-wheeled fuel cell vehicle (100) as claimed in claim 1, wherein all wiring harness being disposed at one of a left-hand side and a right-hand side of the vehicle (100) and all other piping and the BOP components being disposed on a lateral opposite side of the vehicle (100).

## Patentansprüche

1. Zweirädriges Brennstoffzellenfahrzeug (100), aufweisend:
eine Rahmenstruktur mit einem vorderen Teil (F) und einem hinteren Teil (R);
zumindest einen Reaktantbehälter (201), wobei der zumindest eine Reaktantbehälter (201) an dem vorderen Teil (F) der Rahmenstruktur des Fahrzeugs (100) zum Speichern des Reaktanten angebracht ist; und
zumindest einen Brennstoffzellenstapel (202), welcher zumindest eine Brennstoffzellenstapel (202) an dem hinteren Teil (R) der Rahmenstruktur des Fahrzeugs (100) befestigt ist;
wobei der zumindest eine Reaktantbehälter (201) an einer mittleren Rahmenstruktur (103) angebracht ist und dazu eingerichtet ist, dass er von einer vorderen Rahmenstruktur (102) getragen wird.

2. Zweirädriges Brennstoffzellenfahrzeug (100) nach Anspruch 1, wobei die Rahmenstruktur umfasst:
ein Vorderrohr (101), wobei das Vorderrohr (101) in dem vorderen Teil (F) des Fahrzeugs angeordnet ist;
die vordere Rahmenstruktur (102), die sich von dem Vorderrohr (101) nach unten erstreckt;
die mittlere Rahmenstruktur (103), die sich von einem unteren Teil der vorderen Rahmenstruktur (102) nach hinten erstreckt; und
eine hintere Rahmenstruktur (104), die sich von dem hinteren Ende der mittleren Rahmenstruktur (103) in dem hinteren Teil (R) des Fahrzeugs nach hinten und schräg nach oben erstreckt;
wobei eine oder mehrere Energiequellen (214) dazu eingerichtet sind, dass sie von der mittleren Rahmenstruktur (103) des Fahrzeugs (100) getragen werden; und
wobei der zumindest eine Brennstoffzellenstapel (202) an der hinteren Rahmenstruktur (104) angebracht ist.

3. Zweirädriges Brennstoffzellenfahrzeug (100) nach Anspruch 1, wobei der zumindest eine Reaktantbehälter (201) als Niederdruck-Reaktantbehälter (201) konfiguriert ist.

4. Zweirädriges Brennstoffzellenfahrzeug (100) nach Anspruch 1, wobei der zumindest eine Reaktantbehälter (201) mithilfe einer oder mehrerer Halteklammern (203) mit C-Profil und eines Bodenanschlags (204) befestigt ist.

5. Zweirädriges Brennstoffzellenfahrzeug (100) nach Anspruch 1, wobei der zumindest eine Reaktantbehälter (201) eingerichtet ist, dass er einen Sensor zum Erkennen eines Lecks des Reaktanten und zum Warnen eines Benutzers des Fahrzeugs (100) aufweist.

6. Zweirädriges Brennstoffzellenfahrzeug (100) nach Anspruch 2, wobei das Fahrzeug (100) eine Vielzahl von Balance-of-Plant-Komponenten (BOP-Komponenten) aufweist, die in einem unteren Teil der hinteren Rahmenstruktur (104) des Fahrzeugs (100) angeordnet sind, wobei die Vielzahl von BOP-Komponenten den Reaktanten von dem zumindest einen Reaktantenkanister (201) durch eine Reaktantenleitung (205) erhält.

7. Zweirädriges Brennstoffzellenfahrzeug (100) nach Anspruch 6, wobei die Reaktantenleitung (205) von dem zumindest einen Reaktantbehälter (201) entlang einer Seite einer Bodenplatte (206) verläuft.

8. Zweirädriges Brennstoffzellenfahrzeug (100) nach Anspruch 6, wobei die Vielzahl von BOP-Komponenten umfasst:
einen Druckregler (207), der mit der Reaktantenleitung (205) von dem zumindest einen Reaktantenkanister (201) verbunden ist, um den Fluss von Reaktanten zu dem zumindest einen Brennstoffzellenstapel (202) zu regulieren;
einen mit dem Druckregler (207) verbundenen Massendurchflussmesser (208) zum Messen des Flusses des Reaktanten zu dem zumindest einen Brennstoffzellenstapel (202);
ein Magnetventil (209), das von einer Brennstoffzellensteuerung (215) geregelt wird, zum Zuführen von Reaktanten in den zumindest einen Brennstoffzellenstapel (202);
ein Gebläse (210) zum Einblasen von Luft in den zumindest einen Brennstoffzellenstapel (202) für eine Reaktion, die zur Erzeugung von Strom, Wasserdampf und Abgas erfolgen zu lassen;
eine Heizung zum Aufrechterhalten der Temperatur des Reaktanten und der Luft für die zu erfolgende Reaktion; und
einen Temperatursensor zur Messung der Temperaturen des Reaktanten und der Luft.

9. Zweirädriges Brennstoffzellenfahrzeug (100) nach Anspruch 2, das mit zumindest einer Abgasleitung konfiguriert ist, die aus dem zumindest einen Brennstoffzellenstapel (202) austritt, wobei die Abgasleitung in einem hinteren Teil der hinteren Rahmenstruktur (104) angeordnet ist und eingerichtet ist, dass sie unter einem Sitz in einer korbähnlichen Struktur angeordnet ist.

10. Zweirädriges Brennstoffzellenfahrzeug (100) nach Anspruch 1, wobei der zumindest eine Brennstoffzellenstapel (202) mit einer Verriegelungsanordnung (211) gesichert ist.

11. Zweirädriges Brennstoffzellenfahrzeug (100) nach Anspruch 9, wobei die zumindest eine Abgasleitung beinhaltet:
ein Proportionalventil (212) in Leitungsverbindung mit dem zumindest einen Abgasrohr; und
einen Abgaskrümmer (224), der Wasserdampf als Nebenprodukt der Reaktion ableitet.

12. Zweirädriges Brennstoffzellenfahrzeug (100) nach Anspruch 8, wobei ein Kombiinstrument (110) dazu eingerichtet ist, den Messwert des Massendurchflussmessers (208) anzuzeigen.

13. Zweirädriges Brennstoffzellenfahrzeug (100) nach Anspruch 1 oder 2, wobei der zumindest eine Brennstoffzellenstapel (202), der zumindest eine Reaktantbehälter (201) und zumindest ein Batteriepaket (214) entlang einer Längsmittelebene des Fahrzeugs (100) angeordnet sind.

14. Zweirädriges Brennstoffzellenfahrzeug (100) nach Anspruch 1, wobei sämtlicher Kabelbaum entweder auf der linken oder auf der rechten Seite des Fahrzeugs (100) angeordnet ist und sämtliche anderen Rohrleitungen und die BOP-Komponenten auf einer lateralen Seite des Fahrzeugs (100) gegenüberliegend dazu angeordnet sind.

## Revendications

1. Véhicule à pile à combustible à deux roues (100) comprenant :
une structure de châssis comportant une partie avant (F) et une partie arrière (R) ;
au moins un réservoir de réactif (201), ledit au moins un réservoir de réactif (201) étant monté sur la partie avant (F) de la structure du châssis dudit véhicule (100) pour stocker le réactif ; et
au moins une pile à combustible (202), ladite au moins une pile à combustible (202) étant montée sur ladite partie arrière (R) de la structure du châssis dudit véhicule (100) ;
ledit au moins un réservoir de réactif (201) étant monté à une structure de cadre centrale (103) et configuré pour être supporté par une structure de cadre avant (102).

2. Véhicule à pile à combustible à deux roues (100) selon la revendication 1, dans lequel la structure du châssis comprend :
un tuyau de tête (101), ledit tuyau de tête (101) étant disposé dans la partie avant (F) du véhicule ;
ladite structure de cadre avant (102) s'étendant vers le bas à partir dudit tuyau de tête (101) ;
ladite structure de cadre central (103) s'étendant vers l'arrière à partir d'une partie inférieure de ladite structure de cadre avant (102) ; et
une structure de cadre arrière (104) s'étendant vers l'arrière et obliquement vers le haut à partir de l'extrémité arrière de la structure de cadre central (103) dans la partie arrière (R) du véhicule ;
une ou plusieurs sources d'énergie (214) étant configurées pour être supportées par la structure du cadre central (103) du véhicule (100) ; et
ledit au moins un empilement de piles à combustible (202) étant monté sur ladite structure de cadre arrière (104).

3. Véhicule à pile à combustible à deux roues (100) selon la revendication 1, dans lequel ledit au moins un réservoir de réactif (201) est configuré pour être un réservoir de réactif à basse pression (201).

4. Véhicule à pile à combustible à deux roues (100) selon la revendication 1, dans lequel ledit au moins un réservoir de réactif (201) est monté au moyen d'un ou de plusieurs supports de maintien à profilé en C (203) et d'un bouchon de fond (204).

5. Véhicule à pile à combustible à deux roues (100) selon la revendication 1, dans lequel ledit au moins un réservoir de réactif (201) est configuré pour avoir un capteur afin de détecter une fuite dudit réactif et d'avertir un utilisateur du véhicule (100).

6. Véhicule à pile à combustible à deux roues (100) selon la revendication 2, dans lequel ledit véhicule (100) comprend une pluralité de composants Balance Of Plant (BOP) disposés dans une section inférieure de ladite structure de cadre arrière (104) du véhicule (100), ladite pluralité de composants BOP recevant le réactif de ladite au moins une boîte de réactif (201) à travers un tube de réactif (205).

7. Véhicule à pile à combustible à deux roues (100) selon la revendication 6, dans lequel ledit tube de réactif (205) s'étend dudit au moins un réservoir de réactif (201) le long d'un côté d'une planche de plancher (206).

8. Véhicule à pile à combustible à deux roues (100) selon la revendication 6, dans lequel cette pluralité de composants BOP comprend :
un régulateur de pression (207) connecté à ladite tuyauterie de réactif (205) à partir dudit au moins un réservoir de réactif (201) pour réguler le flux de réactif vers ledit au moins un empilement de piles à combustible (202) ;
un débitmètre massique (208) relié audit régulateur de pression (207) pour mesurer le débit du réactif vers l'au moins un empilement de piles à combustible (202) ;
une électrovanne (209) régulée par un contrôleur de pile à combustible (215) pour alimenter en réactif ledit au moins un empilement de piles à combustible (202) ;
un ventilateur (210) pour souffler de l'air dans ledit au moins un empilement de piles à combustible (202) afin qu'une réaction ait lieu pour générer du courant, de la vapeur d'eau et des gaz d'échappement ;
un dispositif de chauffage pour maintenir la température du réactif et de l'air pour que la réaction ait lieu ; et
un capteur de température pour mesurer les températures du réactif et de l'air.

9. Véhicule à pile à combustible à deux roues (100) selon la revendication 2, configuré avec au moins un tuyau d'échappement sortant d'au moins une pile à combustible (202), ledit tuyau d'échappement étant disposé dans une section arrière de la structure du cadre arrière (104) et étant configuré pour être disposé en dessous d'un siège dans une structure de type panier.

10. Véhicule à pile à combustible à deux roues (100) selon la revendication 1, dans lequel ledit au moins un empilement de piles à combustible (202) est fixé à l'aide d'un ensemble de verrouillage (211).

11. Véhicule à pile à combustible à deux roues (100) selon la revendication 9, dans lequel ledit au moins un tuyau d'échappement comprend :
une vanne proportionnelle (212) en ligne avec ledit au moins un tuyau d'échappement ; et
un collecteur d'échappement (224) évacuant la vapeur d'eau comme sous-produit de ladite réaction.

12. Véhicule à pile à combustible à deux roues (100) selon la revendication 8, dans lequel un groupe d'instruments (110) est configuré pour afficher la lecture du débitmètre massique (208).

13. Véhicule à pile à combustible à deux roues (100) selon la revendication 1 ou 2, dans lequel au moins une pile à combustible (202), au moins un réservoir de réactif (201) et au moins une batterie (214) sont disposés le long d'un plan médian longitudinal du véhicule (100).

14. Véhicule à pile à combustible à deux roues (100) selon la revendication 1, dans lequel tous les faisceaux de câbles sont disposés sur un côté gauche ou un côté droit du véhicule (100) et tous les autres tuyaux et les composants BOP sont disposés sur un côté latéral opposé du véhicule (100).
